# EUROPEAN PATENT APPLICATION

(11) **EP 3 561 736 A1**
(43) Date of publication of application: **30.10.2019**
(21) Application number: 17884701.8
(22) Date of filing: 15.12.2017
(51) Int. Cl.: G06N 3/06

(54) **MULTIPLICATION AND ADDITION DEVICE FOR MATRICES, NEURAL NETWORK COMPUTING DEVICE, AND METHOD**

(30) Priority: 20.12.2016 CN 201611185917
(71) Applicant: Shanghai Cambricon Information Technology Co., Ltd, Beijing 100191 (CN)
(72) Inventor: CHEN, Tianshi, Shanghai 201203 (CN); ZHUANG, Yimin, Shanghai 201203 (CN); GUO, Qi, Shanghai 201203 (CN); LIU, Shaoli, Shanghai 201203 (CN); CHEN, Yunji, Shanghai 201203 (CN)
(74) Representative: AWA Sweden AB
(86) International application number: PCT/CN2017/116456
(87) International publication number: WO 2018/113597

(57) **Abstract**

There is provided a matrix multiplication-addition device, a neural network operation device and method. The matrix multiplication-addition device includes a matrix element storage module having a plurality of storage spaces for receiving binary numbers converted from matrix elements in a first matrix according to a rule; a symbolic operation module for performing an XOR operation on the sign represented by each bit in the 0^{th} storage space and the sign of a corresponding matrix element in the second matrix, and using the operation result as the sign bit of the corresponding matrix element in the second matrix; a numeric operation module for extracting, according to positions in the matrix of the matrix elements corresponding to the bits with a value of 1 in the j^{th} storage space, matrix elements at the corresponding positions from the second matrix, adding up the matrix elements at the corresponding positions, and shifting a result of addition left by i-j bits, to obtain an intermediate operation result; and an accumulation module for adding up the intermediate operation results in the 1^{st} to the i-1^{th} storage spaces to obtain a multiplication-addition result on the first matrix and a second matrix.

## Description

### TECHNICAL FIELD

The present disclosure relates to the technical field of data processing. Specifically, the present disclosure relates to a matrix multiplication-addition device and method, and to a neural network device and method.

### BACKGROUND

Matrix operations have a wide range of applications in data processing for various research fields. When the amount of the data to be processed is very large, the storage and the operations of the matrix need to occupy a large amount of storage resources and computing resources.

In the field of neural networks, a huge amount of multiplication-addition is required. As one of the most frequently used important operation, convolution also has the problem of having a large demand for storage resources and computing resources.

### SUMMARY OF INVENTION

There is provided in a first aspect of the present disclosure a matrix multiplication -addition device which is used for performing multiplication-additions on a first matrix and a second matrix of the same scale, wherein matrix elements in the first matrix and the second matrix are fixed-point numbers. The device comprises:
a matrix element storage module, which includes a plurality of storage spaces for receiving M×N binary numbers of M×N matrix elements in the first matrix according to a rule defining that, the plurality of storage spaces are numbered as 0^{th} to i-1^{th} storage spaces, i is the bit width of the binary numbers, each storage space has a size of K bits, and K is equal to the number of the matrix elements in the first matrix, i.e., K=M×N, wherein the 0^{th} storage space is used for storing the sign bits of K binary numbers, and the j^{th} storage space is used for storing the i-j+1^{th} bit of each binary number, wherein the i, j, k, M, and N are positive integers, and i≥ 2, 1≤j≤i;
a symbolic operation module, which is used for performing an XOR operation on the sign represented by each bit in the 0^{th} storage space and the sign of a corresponding matrix element in the second matrix, and using the operation result as the sign bit of the corresponding matrix element in the second matrix;
a numeric operation module, which includes at least one shifting operator and at least one adder, the numeric operation module is used for extracting, according to positions in the matrix of the matrix elements corresponding to the bits with a value of 1 in the j^{th} storage space, matrix elements at the corresponding positions from the second matrix, adding up the matrix elements at the corresponding positions, and shifting a result of addition left or right by i-j bits, to obtain an intermediate operation result;
an accumulation module, which is used for adding up the intermediate operation results in the 1^{st} to the i-1^{th} storage spaces to obtain a multiplication-addition result on the first matrix and the second matrix.

In a further implementation, in the matrix element storage module, a correspondence between the matrix elements in the first matrix and the bits in each storage space is that: the k^{th} bit in each storage space stores the bit of the matrix element at the m^{th} row and the n^{th} column in the first matrix, where 1≤k≤K, and k=(m-1)×N+n, N is a total number of columns of the first matrix, 1≤m≤M, 1≤n≤N.

In a further implementation, a correspondence between the matrix elements in the first matrix and the bits in each storage space is that: the k^{th} bit stores the bit of the matrix element at the m^{th} row and the n^{th} column of a convolution kernel matrix A, where 1≤k≤K, and k=m+(n-1)×M, M is a total number of rows of the first matrix, 1≤m≤M, 1≤n≤N.

In a further implementation, the numeric operation module extracts, according to the correspondence, corresponding matrix elements from the positions of the corresponding matrix elements in the second matrix.

In a further implementation, the numeric operation module is further used for, when obtaining the intermediate operation result from the storage spaces, revoking a calculated result if there are additions on matrix elements of the same positions.

In a further implementation, the device further includes an intermediate storage module for storing, when the 0^{th} to the i-1^{th} storage spaces have at least two same bits with a value of 1, a result of addition on the corresponding matrix elements in the second matrix, for the revoking by the numeric operation module.

In a further implementation, the matrix element storage module is a cache memory or a register.

In a further implementation, the adder is used for extracting, according to the positions in the matrix of the matrix elements corresponding to the bits with a value of 1 in the j^{th} storage space, matrix elements at the corresponding positions from the second matrix, and adding up the matrix elements at the corresponding positions.

In a further implementation, the shifting operator is used for shifting the results in the adder of the additions on the matrix elements to the left by i-j bits, to obtain the intermediate operation result.

In a further implementation, the adder is further used for, when obtaining the intermediate operation result from the storage spaces, obtaining a calculated result from the intermediate storage module as input data of the adder if there are additions on matrix elements of the same positions.

In a further implementation, the first matrix and the second matrix have the same number of rows and columns, and the matrix elements are fixed-point numbers.

In a further implementation, the device further includes a conversion unit for converting the M×N binary numbers of the M×N matrix elements in the first matrix according to the rule.

In a second aspect of the present disclosure, there is a method of matrix multiplication -addition using any of the afore-described devices, which is used for performing multiplication -additions on a first matrix and a second matrix, wherein the first matrix and the second matrix have the same number of rows and columns and matrix elements in the first matrix and the second matrix are fixed-point numbers. The method comprises:
storing M×N binary numbers converted from M×N matrix elements in the first matrix into 0th to i-1^{th} storage spaces of a matrix element storage module, with i being the bit width of the binary numbers, each storage space having a size of K bits, and K being equal to the number of matrix elements in the first matrix, wherein the 0^{th} storage space is used for storing the sign bits of M×N binary numbers, and the j^{th} storage space is used for storing the i-j+1^{th} bit of each binary number, the i, j, and k are positive integers, and, i≥2, 1≤j≤i;
performing an XOR operation on the sign represented by each bit in the 0^{th} storage space and the sign of a corresponding matrix element in the second matrix, and using the operation result as the sign bit of the corresponding matrix element in the second matrix;
for any j^{th} storage space, according to positions of the bits with a value of 1 in the storage space, extracting corresponding matrix elements from the second matrix, adding up the matrix elements, and shifting the result of addition left by i-j bits to obtain an intermediate operation result;
adding up the intermediate operation results in the 1st to the i-1^{th} storage spaces to obtain a multiplication-addition result on the first matrix and the second matrix.

In a further implementation, a correspondence between the matrix elements in the first matrix and the bits in each storage space is that: the k^{th} bit in each storage space stores the bit of the matrix element at the m^{th} row and the n^{th} column in the first matrix, where 1≤k≤K, and k=(m-1)×N+n, N is a total number of columns of the first matrix, 1≤m≤M, 1≤n≤N.

In a further implementation, a correspondence between the matrix elements in the first matrix and the bits in each storage space is that: the k^{th} bit stores the bit of the matrix element at the m^{th} row and the n^{th} column of a convolution kernel matrix A, where 1≤k≤K, and k=m+(n-1)×M, M is a total number of rows of the first matrix, 1≤m≤M, 1≤n≤N.

In a further implementation, the numeric operation module extracts, according to the correspondence, corresponding matrix elements from the positions of the corresponding matrix elements in the second matrix.

In a further implementation, when obtaining the intermediate operation result from the storage spaces, revoking a calculated result by the numeric operation module if there are additions on matrix elements of the same positions.

In a further implementation, the method further comprises, when the 0^{th} to the i-1^{th} storage spaces have at least two same bits with a value of 1, storing by an intermediate storage module a result of addition on the corresponding matrix elements in the second matrix, for the revoking by the numeric operation module.

In a further implementation, the method further comprises, according to the positions in the matrix of the matrix elements corresponding to the bits with a value of 1 in the j^{th} storage space, extracting matrix elements at the corresponding positions from the second matrix and adding up the matrix elements at the corresponding positions by the adder.

In a further implementation, the method further comprises shifting, by the shifting operator, the results in the adder of the additions on the matrix elements to the left by i-j bits, to obtain the intermediate operation result.

In a further implementation, the method further comprises, when obtaining the intermediate operation result from the storage spaces, obtaining by the adder a calculated result as input data of the adder if there are additions on matrix elements of the same positions.

In a further implementation, the method further comprises converting, by the conversion unit, the M×N binary numbers of the M×N matrix elements in the first matrix according to the rule.

In a third aspect of the present disclosure, there is provided a neural network operation device, comprising:
a submatrix dividing module for sliding over a neuron matrix with a convolution kernel matrix as a sliding window, and obtaining in each sliding a submatrix of the neuron matrix having the same scale as the convolution kernel matrix, wherein the convolution kernel matrix serves as a first matrix and each submatrix serves as a second matrix;
a matrix element storage module, including a plurality of storage spaces for receiving M×N binary numbers of M×N matrix elements in the first matrix according to a rule defining that, the plurality of storage spaces are numbered as 0^{th} to i-1^{th} storage spaces, i is the bit width of the binary numbers, each storage space has a size of K bits, and K is equal to the number of the matrix elements in the first matrix, i.e., K=M×N, wherein the 0^{th} storage space is used for storing the sign bits of K binary numbers, and the j^{th} storage space is used for storing the i-j+1^{th} bit of each binary number, the i, j, k, M, and N are positive integers, and, i≥2, 1≤j≤i;
a symbolic operation module, used for performing an XOR operation on the sign represented by each bit in the 0^{th} storage space and a sign of a corresponding matrix element in the second matrix, and using the operation result as the sign bit of the corresponding matrix element in the second matrix;
a numeric operation module, including at least one shifting operator and at least one adder, the numeric operation module is used for extracting, according to positions in the matrix of the matrix elements corresponding to the bits with a value of 1 in the j^{th} storage space, matrix elements at the corresponding positions from the second matrix, adding up the matrix elements at the corresponding positions, and shifting a result of addition left or right by i-j bits, to obtain an intermediate operation result;
an accumulation module, for adding up the intermediate operation results in the 1^{st} to the i-1^{th} storage spaces to obtain a multiplication-addition result on the first matrix and the second matrix; and
a convolution result obtaining module for forming, according to the order of the sliding, the multiplication-addition results into a matrix as a convolution result.

In a further implementation, in the matrix element storage module, a correspondence between the matrix elements in the first matrix and the bits in each storage space is that: the k^{th} bit in each storage space stores the bit of the matrix element at the m^{th} row and the n^{th} column in the first matrix, where 1≤k≤K, and k=(m-1)×N+n, N is a total number of columns of the first matrix, 1≤m≤M, 1≤n≤N.

In a further implementation, a correspondence between the matrix elements in the first matrix and the bits in each storage space is that: the k^{th} bit stores the bit of the matrix element at the m^{th} row and the n^{th} column of a convolution kernel matrix A, where 1≤k≤K, and k=m+(n-1) ×M, M is a total number of rows of the first matrix, 1≤m≤M, 1≤n≤N.

In a further implementation, the numeric operation module extracts, according to the correspondence, corresponding matrix elements from the positions of the corresponding matrix elements in the second matrix.

In a further implementation, the numeric operation module is further used for, when obtaining the intermediate operation result from the storage spaces, revoking a calculated result if there are additions on matrix elements of the same positions.

In a further implementation, the device further includes an intermediate storage module for storing, when the 0^{th} to the i-1^{th} storage spaces have at least two same bits with a value of 1, a result of addition on the corresponding matrix elements in the second matrix, for the revoking by the numeric operation module.

In a further implementation, the matrix element storage module is a cache memory or a register.

In a further implementation, the adder is used for extracting, according to the positions in the matrix of the matrix elements corresponding to the bits with a value of 1 in the j^{th} storage space, matrix elements at the corresponding positions from the second matrix, and adding up the matrix elements at the corresponding positions.

In a further implementation, the shifting operator is used for shifting the results in the adder of the additions on the matrix elements to the left by i-j bits, to obtain the intermediate operation result.

In a further implementation, the adder is further used for, when obtaining the intermediate operation result from the storage spaces, obtaining a calculated result from the intermediate storage module as input data of the adder if there are additions on matrix elements of the same positions.

In a further implementation, the first matrix and the second matrix have the same number of rows and columns, and the matrix elements are fixed-point numbers.

In a further implementation, the first matrix and the second matrix have the same number of rows and columns, and the matrix elements are fixed-point numbers.

According to a fourth aspect of the present disclosure, there is provided a method of convolution using any of the afore-described neural network operation device, comprising:
sliding over a neuron matrix by a submatrix dividing module with a convolution kernel matrix as a sliding window, and obtaining in each sliding a submatrix of the neuron matrix having the same scale as the convolution kernel matrix, wherein the convolution kernel matrix serves as a first matrix and each submatrix serves as a second matrix;
receiving, by a plurality of storage spaces of a matrix element storage module, M×N binary numbers converted from M×N matrix elements in the first matrix according to a rule, with M×N binary numbers converted from M×N matrix elements in the first matrix stored in 0^{th} to i-1^{th} storage spaces of the matrix element storage module, i being the bit width of the binary numbers, each storage space having a size of K bits, and K being equal to the number of the matrix elements in the first matrix, wherein the 0^{th} storage space is used for storing the sign bits of M×N binary numbers, and the j^{th} storage space is used for storing the i-j+1^{th} bit of each binary number, wherein the i, j, and k are positive integers, and i≥2, 1≤j≤i;
performing, by a symbolic operation module, an XOR operation on the sign represented by each bit in the 0^{th} storage space and the sign of a corresponding matrix element in the second matrix, and using the operation result as the sign bit of the corresponding matrix element in the second matrix;
for any j^{th} storage space, according to positions of the bits with a value of 1 in the storage space, extracting corresponding matrix elements from the second matrix, adding up the matrix elements, and shifting the result of addition left by i-j bits by a numeric operation module, to obtain an intermediate operation result;
adding up the intermediate operation results in the 1^{st} to the i-1^{th} storage spaces by an accumulation module, to obtain a multiplication-addition result on the first matrix and the second matrix;
by a convolution result obtaining module, obtaining a multiplication-addition result on each submatrix with the first matrix and forming the multiplication-addition results into a matrix as a convolution result according to the order of the sliding.

In a further implementation, a correspondence between the matrix elements in the first matrix and the bits in each storage space is that: the k^{th} bit in each storage space stores the bit of the matrix element at the m^{th} row and the n^{th} column in the first matrix, where 1≤k≤K, and k=(m-1)×N+n, N is a total number of columns of the first matrix, 1≤m≤M, 1≤n≤N.

In a further implementation, a correspondence between the matrix elements in the first matrix and the bits in each storage space is that: the k^{th} bit stores the bit of the matrix element at the m^{th} row and the n^{th} column of a convolution kernel matrix A, where 1≤k≤K, and k=m+(n-1)×M, M is a total number of rows of the first matrix, 1≤m≤M, 1≤n≤N.

In a further implementation, the numeric operation module extracts, according to the correspondence, corresponding matrix elements from the positions of the corresponding matrix elements in the second matrix.

In a further implementation, the method further comprises, when obtaining the intermediate operation result from the storage spaces, revoking a calculated result by the numeric operation module if there are additions on matrix elements of the same positions.

In a further implementation, the method further comprises, when the 0^{th} to the i-1^{th} storage spaces have at least two same bits with a value of 1, storing by an intermediate storage module a result of addition on the corresponding matrix elements in the second matrix, for the revoking by the numeric operation module.

In a further implementation, the method further comprises, according to the positions in the matrix of the matrix elements corresponding to the bits with a value of 1 in the j^{th} storage space, extracting matrix elements at the corresponding positions from the second matrix and adding up the matrix elements at the corresponding positions by the adder.

In a further implementation, the method further comprises shifting, by a shifting operator, the results in the adder of the additions on the matrix elements to the left by i-j bits, to obtain the intermediate operation result.

In a further implementation, the method further comprises, when obtaining the intermediate operation result from the storage spaces, obtaining by the adder a calculated result as input data of the adder if there are additions on matrix elements of the same positions.

In a further implementation, the method further comprises converting, by the conversion unit, the M×N binary numbers of the M×N matrix elements in the first matrix according to the rule.

According to a fifth aspect of the present disclosure, there is provided the afore-described neural network operation device for acquiring data to be operated and control information from outside, executing neural network operations, and transmitting the result of the execution through an I/O interface; preferably the neural network operation device includes a plurality of matrix multiplication-addition devices linked to transmit data.

According to a sixth aspect of the present disclosure, there is provided a combined processing device, comprising:
the afore-described neural network operation device; a universal interconnection interface; and a non-neural-network operation device, wherein the neural network operation device interacts with the non-neural-network operation device via the universal interconnection interface to complete user-specified operations together.

According to the seventh aspect of the present disclosure, there is provided a chip which includes the afore-described neural network operation device or the combined processing device.

According to the eighth aspect of the present disclosure, there is provided an electronic device which includes the afore-described chip.

The technical solution of the present disclosure has the following advantages.

The matrix element storage module of the present disclosure stores the first matrix in the manner of array storage, with each row being an individual storage space. Each bit in a binary number of the first matrix is stored in a distinct storage space according to the rule, thereby improving the efficiency of the subsequent multiplication-additions;

The technical solution of the present disclosure uses a unified storage space to store the same binary bits of a plurality of fixed-point numbers in the first matrix. It is only required to extract the elements in the second matrix corresponding to the "non-zero" bits for each storage space to perform the addition and shifting operations, without the need of multiplication, reducing the amount of computation; moreover, in the corresponding hardware, the multiplier is replaced by the shifting operator and the adder, saving the cost in terms of hardware.

In the present disclosure, for an arbitrary number of storage spaces, if there are identical additions applied, the addition can be performed only once, and the result of the addition is shared among the storage spaces, which reduces the number of operations for identical operations, and which further reduces the amount of computation.

By the matrix multiplication-addition method of the present disclosure, the operation speed in neural network operations can be greatly improved, with the amount of computation significantly reduced, to reduce the need of storage resources and computing resources.

### BRIEF DESCRIPTION OF THE DRAWINGS

Fig. 1 is a schematic diagram of a neural network convolution operation according to an embodiment of the present disclosure.
Fig. 2 is a structural schematic diagram of a matrix multiplication-addition device according to an embodiment of the present disclosure.
Fig. 3 is a flow chart of a matrix multiplication-addition method according to an embodiment of the present disclosure.
Fig. 4 is a structural schematic diagram of another matrix multiplication-addition device according to an embodiment of the present disclosure.
Fig. 5 is a schematic diagram of a conversion in the storage space according to an embodiment of the present disclosure.
Fig. 6 is a schematic diagram of an addition and shifting operation according to an embodiment of the present disclosure.
Fig. 7 is a schematic diagram of the sharing of operation results according to an embodiment of the present disclosure.
Fig. 8 is a structural schematic diagram of a neural network operation device according to an embodiment of the present disclosure.
Fig. 9 is a flow chart of a neural network convolution operation according to an embodiment of the present disclosure.
Fig. 10 is a schematic diagram of a combined processing device according to an embodiment of the present disclosure.

### DETAILED DESCRIPTION

In order to make the object, the technical solution and the advantages of the present disclosure clear, the present disclosure is further described in detail with specific embodiments by taking reference to the drawings. The advantages and effects of the present disclosure are made more apparent by the following description of the present disclosure. The drawings are simplified diagrams merely for illustrative purpose. The number, shape, and dimension of the components shown in the drawings can be modified according to the actual implementations. The configurations of the components can be more complicated. Practices or applications in other aspects can be made in the present disclosure. Variations and adjustments can be made without departing the spirit and the scope defined by the present disclosure.

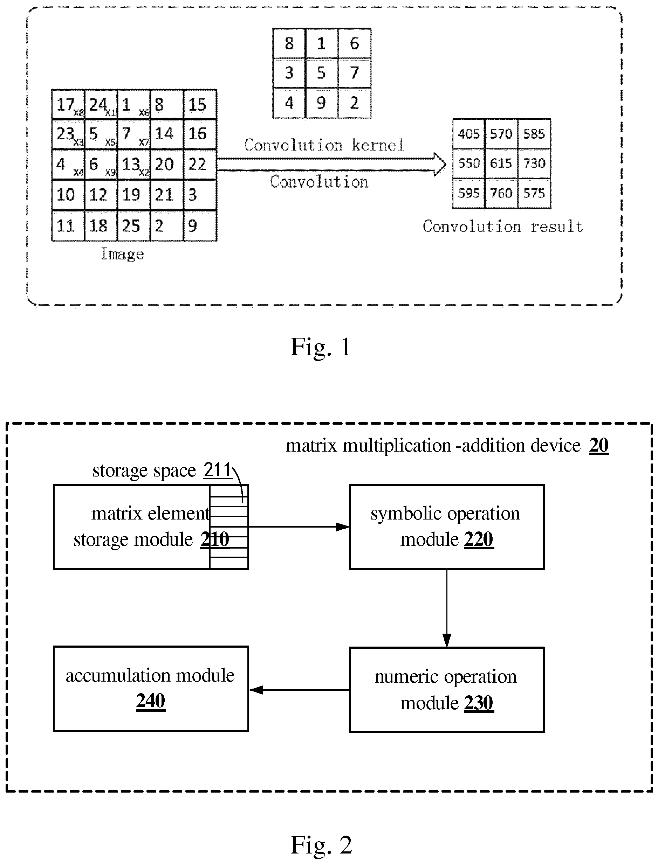

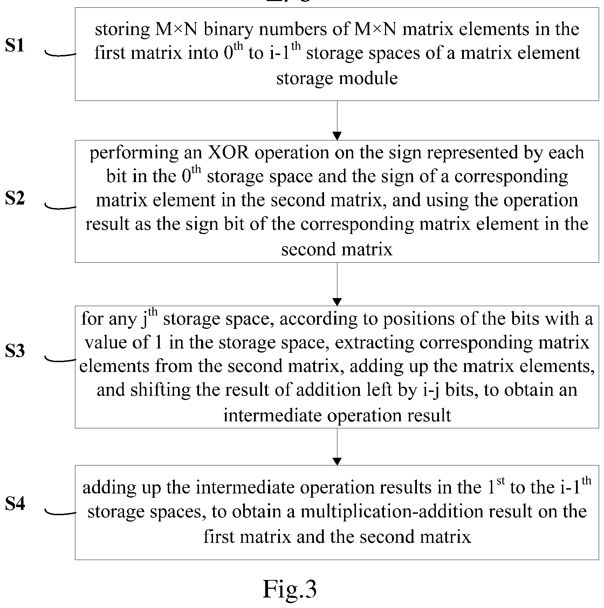

Fig. 2 is a structural schematic diagram of a matrix multiplication-addition device according to an embodiment of the present disclosure. Fig. 3 is a flow chart of a matrix multiplication-addition method according to an embodiment of the present disclosure. The multiplication-addition on the first matrix and the second matrix will be described in detail in the following in conjunction with the operation device and method.

The matrix multiplication-addition device 20 shown in Fig. 2 includes: a matrix element storage module 210, a symbolic operation module 220, a numeric operation module 230 and an accumulation module 240. The device is used for perform multiplication-additions on the first matrix and the second matrix. The first matrix and the second matrix have the same number of rows and columns. The matrix elements are fixed-point numbers.

The matrix element storage module 210 includes a plurality of storage spaces 211 for receiving M×N binary numbers converted from M×N matrix elements in the first matrix according to a rule defining that, the plurality of storage spaces are numbered as 0^{th} to i-1^{th} storage spaces, i is the bit width of the binary numbers, each storage space has a size of K bits, and K is equal to the number of the matrix elements in the first matrix, i.e., K=M×N, wherein the 0^{th} storage space is used for storing the sign bits of K binary numbers, and the j^{th} storage space is used for storing the i-j+1^{th} bit of each binary number, wherein the i, j, k, M, and N are positive integers, and i≥2, 1≤j≤i. The plurality of storage spaces are a plurality of real storage areas set up in the storage. The method for storing data herein is different from conventional methods for data storage, but receiving the converted M×N binary numbers according to the above rule. The matrix element storage module can be a cache or a register.

The correspondence between the matrix elements in the first matrix and the bits in each storage space 211 is that: the k^{th} bit stores the bit of the matrix element at the m^{th} row and the n^{th} column of the convolution kernel matrix A, where 1≤k≤K, and k=(m-1)×N+n, N is a total number of columns of the first matrix. That is, the elements in the convolution kernel matrix A in this embodiment are stored in a row-major order. It can be clarified that the storing order in the present disclosure can also be a column-major order or any other order as long as the corresponding logic can be satisfied. An alternative column-major order can be as follows: the k^{th} bit stores the bit of the matrix element at the m^{th} row and the n^{th} column of the convolution kernel matrix A, where 1≤k≤K, and k=m+(n-1)×M, M is a total number of rows of the first matrix, 1≤m≤M, 1≤n≤N.

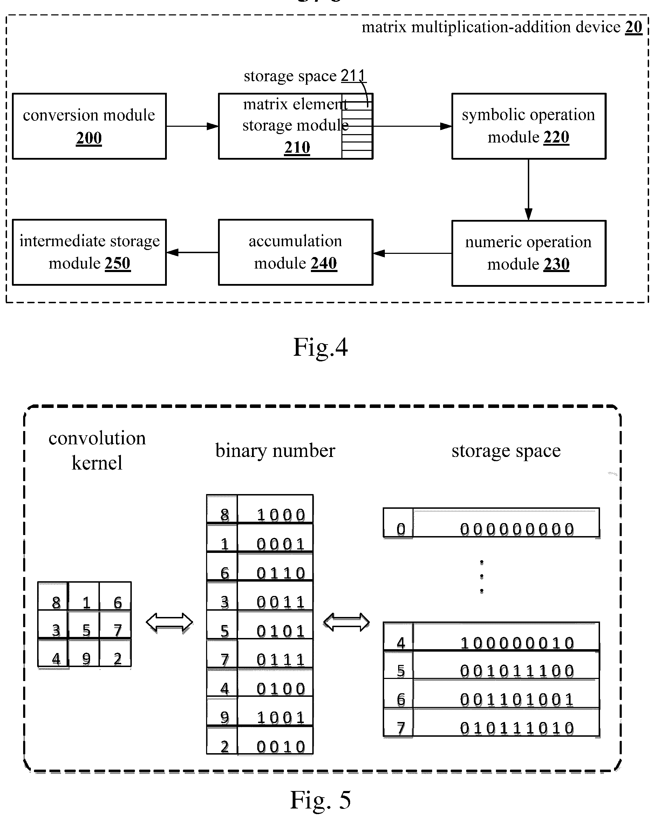

Fig. 5 is a schematic diagram of a conversion in the storage space according to an embodiment of the present disclosure. As shown in Fig. 5, the matrix elements of the convolution kernel are converted to binary numbers. For example, 8 is converted to 00001000, 6 converted to 00000110, 9 converted to 00001001, and so on, to obtain 9 binary numbers containing 8 bits (with the most significant bit being the sign bit). One can conceive that the binary numbers converted according to the present disclosure are not limited to 8 bits, but may be converted with any number of bits depending on the value of number. The data of the 9 binary numbers can be stored in the storage spaces numbered from 0 to 7. As shown in Fig. 5, the 0^{th} storage space is used to store the signs of the 9 binary numbers, with 0 indicating a positive number and 1 indicating a negative number. All the elements in the matrix shown in Fig. 1 are positive numbers. Therefore, all the values in the 0^{th} storage space shown Fig. 5 are 0. The 7^{th} storage space is used to store the least significant bits of the 9 binary numbers. For example, the least significant bits of the matrix elements 8, 6, 4, 2 in the convolution kernel matrix are 0; and the least significant bits of the matrix elements 1, 3, 5, 7, 9 in the convolution kernel matrix are 1. The 6^{th} storage space is used to store the least but one significant bits of the 9 binary numbers; the 5^{th} storage space is used to store least but two significant bits of the 9 binary numbers; and so on, and the 1^{st} storage space is used to store the most significant bits of the 9 binary numbers. In each storage space, each element is stored in an order that: the element at the first row and the first column is stored in the first bit; the element at the first row and the second column is stored in the second bit; the element at the first row and the third column is stored in the third bit; the element at the second row and the first column is stored in the fourth bit.... That is, the elements are arranged in a row-major order. The elements in this embodiment of the present disclosure can be arranged in other orders. The orders and the numerals of the storage spaces can also be set with other logics.

Since the storing order of the elements of the first matrix in each storage space is known, and the first matrix and the second matrix have the same scale (i.e., the numbers of rows and columns in the first matrix and the second matrix are the same), the matrix elements of the second matrix can be readily determined according to the positions of the bits in the storage space.

The symbolic operation module 220 is used for perform an XOR operation on the sign represented by each bit in the 0^{th} storage space and the sign of the corresponding matrix element in the second matrix, and using the operation result as the sign bit of the corresponding matrix element in the second matrix.

Referring to Figs. 1 and 5, all the bits in the 0^{th} storage space are 0, which indicates that the elements of the first matrix are all positive numbers, and the elements of the second matrix (the submatrix shown at the upper left of Fig. 1) are positive numbers, of which the sign bits are 0. Therefore, after the XOR operation, the values of the sign bits of the obtained elements of the second matrix are still 0.

The numeric operation module 230 includes at least one shifting operator and at least one adder, the numeric operation module is used for extracting, according to positions in the matrix of the matrix elements corresponding to the bits with a value of 1 in the j^{th} storage space, matrix elements at the corresponding positions from the second matrix, adding up the matrix elements at the corresponding positions, and shifting a result of addition left or right by i-j bits, to obtain an intermediate operation result.

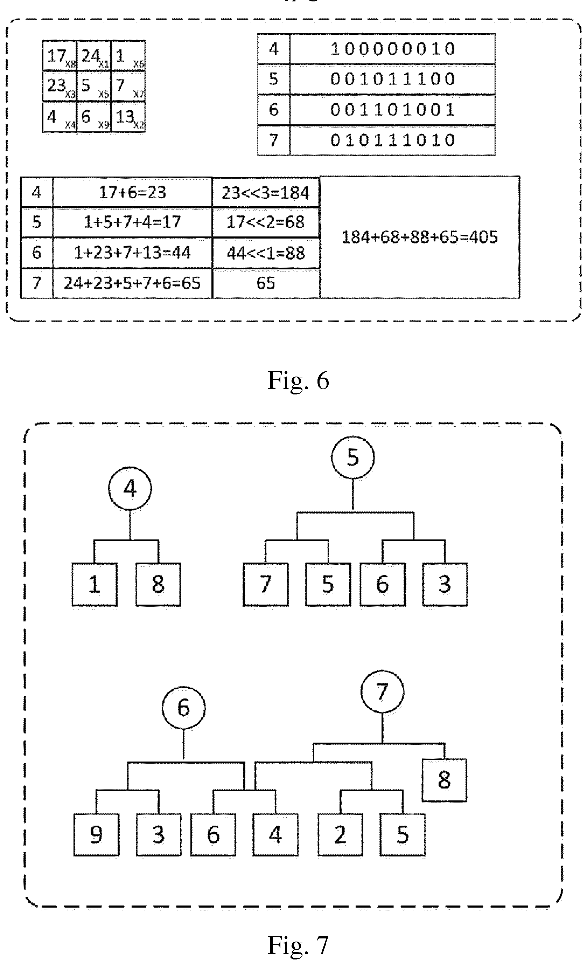

Fig. 6 is a schematic diagram of an addition and shifting operation according to an embodiment of the present disclosure. As shown in Fig. 6, since the 0^{th} storage space has been described above, and the values in the 1^{st} to the 3^{rd} storage spaces are 0, the storage spaces are omitted from Fig. 6. As seen from the 4^{th} storage space, the values at the 1^{st} and the 8^{th} bits are 1. Therefore, the 1^{st} value (at the first row and the first column) of the second matrix (the submatrix shown in the upper left of Fig. 1), which is 17, and the 8^{th} value (at the third row and the second column) of the second matrix (the submatrix shown in the upper left of Fig. 1), which is 6, are extracted and added to get 23. Since the 4^{th} storage space indicates the least but three significant bit of each element, with regard to the least significant bit, the result is further shifted 3 bits to the left, getting a value of 184. As seen from the fifth storage space, the values at the third, the fifth, the sixth, and the seventh bits are 1. Therefore, the third value 1, the fifth value 5, the sixth value 7, and the seventh value 4 of the second matrix (submatrix in the upper left corner in Fig. 1) are extracted and added, getting 17. Since the fifth storage space represents the least but two significant bit of each element, with regard to the least significant bit, the result is further shifted 2 bits to the left, getting a value of 68.

In addition, for an arbitrary number of storage spaces, if there are identical additions applied, the addition can be performed only once, and the result of addition is shared among the storage spaces (the result of the addition can be stored in an intermediate storage module). The intermediate storage modules herein include a plurality of real storage areas set up in the memory for storing the shared operation results. Referring to Fig. 4, the matrix multiplication-addition device 20 may further include an intermediate storage module 250 used for storing a result of addition on the corresponding matrix elements of the second matrix when the 0^{th} to the i-1^{th} storage spaces have at least two same bits with a value of 1, for the revoking by the numeric operation module. As can be seen from Fig. 6, since the 4^{th} and the 6^{th} bits in both the 6^{th} and the 7^{th} storage spaces are 1, the following operations need to be performed twice: extracting the 4^{th} element 23 and the 6^{th} element 7 of the second matrix, and performing an addition thereon, i.e., 23+7. These are obviously repetitive operations. Therefore, in this embodiment of the present disclosure, an intermediate storage module is constructed to realize a sharing of the operation results among a plurality of storage spaces. Fig. 7 is a schematic diagram of the sharing of operation results according to an embodiment of the present disclosure. The circles in Fig. 7 indicate the numerals of the storage spaces; the squares indicate the numerals of the elements to be subjected to the addition when there are correspondences between the storage spaces and the second matrix. As shown in Fig. 7, since the 6^{th} and 7^{th} storage spaces have common nodes at the 4^{th} bit and the 6^{th} bit, after the operation of 23+7 for the 6^{th} storage space, the result of addition (which can be stored in the intermediate storage module herein) can be shared with the 7^{th} storage space, without an additional operation of 23+7 for the 7^{th} storage space. This obviously reduces the amount of computation. Correspondingly, when multiple adders are used for, when obtaining the intermediate operation result from the storage spaces, obtaining a calculated result from the intermediate storage module as input data of the adder if there are additions on matrix elements of the same positions.

The accumulation module 240 is used for adding up the intermediate operation results in the 1^{st} to the i-1^{th} storage spaces to obtain the multiplication-addition result for the first matrix and the second matrix.

In other words, as shown in Fig. 6, after the element extractions, the adding of elements, and the shifting operations for all the storage spaces, the intermediate operation results of 184, 68, 88, and 65 are obtained. The multiplication-addition result of 405 can be then obtained by adding up these intermediate operation results.

Fig. 3 is a flow chart of a matrix multiplication-addition method according to an embodiment of the present disclosure. The steps of using the device shown in Fig. 2 to perform the multiplication-addition can include:
S1: storing, by the matrix element storage module 210, M×N binary numbers of M×N matrix elements in the first matrix into 0^{th} to i-1^{th} storage spaces of a matrix element storage module, with i being the bit width of the binary numbers, each storage space having a size of K bits, and K being equal to the number of matrix elements in the first matrix, wherein the 0^{th} storage space is used for storing the sign bits of M×N binary numbers, and the j^{th} storage space is used for storing the i-j+1^{th} bit of each binary number, the i, j, and k are positive integers, and, i≥2, 1≤j≤i;
S2: performing, by the symbolic operation module 220, an XOR operation on the sign represented by each bit in the 0^{th} storage space and the sign of a corresponding matrix element in the second matrix, and using the operation result as the sign bit of the corresponding matrix element in the second matrix;
S3: for any j^{th} storage space, according to positions of the bits with a value of 1 in the storage space, extracting corresponding matrix elements from the second matrix, adding up the matrix elements, and shifting the result of addition left by i-j bits by the numeric operation module 230, to obtain an intermediate operation result;
S4: adding up the intermediate operation results in the 1^{st} to the i-1^{th} storage spaces by the accumulation module 240, to obtain a multiplication-addition result on the first matrix and the second matrix.

According to the above steps S1 to S4, it can be seen that the embodiment of the present disclosure realizes the matrix multiplication-addition merely by additions and shifting, reducing the amount of computation as compared to multiplications. Moreover, by providing the intermediate storage module and sharing the results of identical additions in the embodiment of the present disclosure, repetitive additions can be avoided, which further reduces the amount of computation.

Fig. 4 is a structural schematic diagram of another matrix multiplication-addition device according to an embodiment of the present disclosure. As shown in Fig. 4, the matrix multiplication-addition device according to the embodiment of the present disclosure can further include a conversion module 200 which is used to convert the M×N binary numbers of the M×N matrix elements in the first matrix according to a rule defining that, the plurality of storage spaces are numbered sequentially as 0^{th} to i-1^{th} storage spaces, i is the bit width of the binary numbers, each storage space has a size of K bits, and K is equal to the number of the matrix elements in the first matrix, i.e., K=M×N, wherein the 0^{th} storage space is used for storing the sign bits of K binary numbers, and the j^{th} storage space is used for storing the i-j+1^{th} bit of each binary number, wherein the i, j, k, M, and N are positive integers, and i≥2, 1≤j≤i. The conversion module 200 can be a functional module of a processor.

There may be a plurality of the matrix multiplication-addition device according to the present disclosure. The matrix multiplication-addition devices can be interlinked via a particular structure to transmit data. For example, they can be interlinked via a PCIE bus for data transmission, so as to support operations of a larger scale. In such case, the devices can share a common control system or each may have its own control system. They may share a memory, or a respective memory may be provided for each accelerator. In addition, the interlinking manner can be of any interconnection topology.

Fig. 1 is a schematic diagram of a neural network convolution operation according to an embodiment of the present disclosure. As shown in Fig. 1, the convolution kernel of the neural network is a 3×3 matrix. All the matrix elements in the matrix are fixed-point numbers. The fixed-point number is different from a floating-point number in that the fixed-point number has a fixed decimal point. When the fixed-point number is represented by binary number data, each bit of the binary number data represents the value of the number (while a binary number converted from a floating point number contains a base digit, an exponent bit, and a sign bit, thus, each bit of the binary number may not represent the value itself). An image has been input into the neural network as a neuron. The image is represented by a 5×5 matrix (one matrix element represents a pixel of the image). When applying convolution on a 3×3 matrix with the 5×5 matrix, the 3×3 matrix need to be slided over the 5×5 matrix. As shown in Fig. 1, when the 3×3 matrix covers a 3×3 matrix in the upper left corner of the 5×5 matrix, a multiplication-addition of the two 3×3 matrices are performed, i.e. the corresponding rows and columns are respectively multiplied and then added to obtain the result of multiplication-addition on the two 3×3 matrices. For example, when the 3×3 matrix covers a 3×3 matrix in the upper left corner of the 5×5 matrix, the multiplication-addition results in 405. Then the 3×3 matrix slides over the 5×5 matrix by a default sliding step length of 1 (or certainly any other step length will be applicable). That is, the 3×3 matrix is entirely shifted to the right by one element. Now the multiplication-addition is performed on the 3×3 matrix and the covered 3×3 matrix (as the matrix slides to the right from the upper left corner by a step length of 1, the corresponding position of the result of multiplication-addition in the convolution result matrix will be the first row, the second column), and so on. Thus, by sliding the 3×3 matrix for 9 times, 9 results of the multiplication-addition are obtained which constitute the convolution result as shown in Fig. 1.

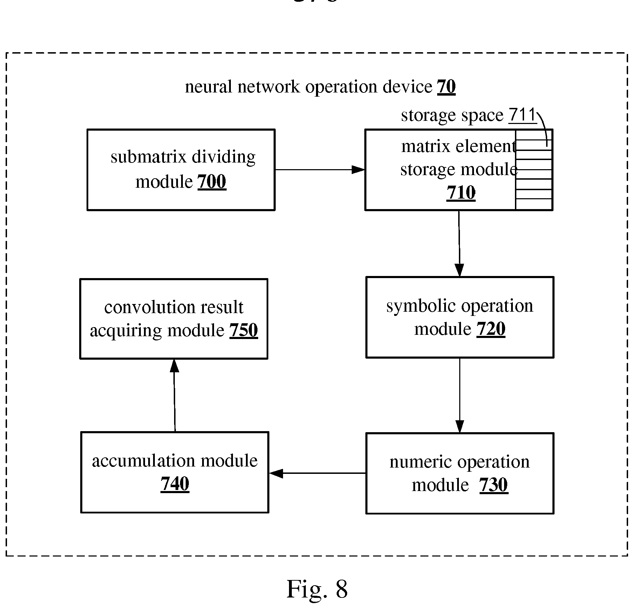

Fig. 8 is a structural schematic diagram of a neural network operation device according to an embodiment of the present disclosure. The neural network operation device 70 in Fig.8 comprises a submatrix dividing module 700, a matrix element storage module 710 (including a plurality of storage spaces 711), a symbolic operation module 720, a numeric operation module 730, an accumulation module 740, and a convolution result acquiring module 750.

The submatrix dividing module 700 is used for sliding over a neuron matrix with a convolution kernel matrix as a sliding window, and obtaining by each sliding a submatrix of the neuron matrix having the same scale as the convolution kernel matrix, with the convolution kernel matrix serving as a first matrix and each submatrix serving as a second matrix.

The matrix element storage module 710 (including a plurality of storage spaces 711), the symbolic operation module 720, the numeric operation module 730, and the accumulation module 740 can be configured according to the matrix multiplication-addition device of the embodiment shown in Fig. 2, which will not be repeated herein.

The convolution result acquiring module 750 is used for forming the multiplication -addition results into a matrix as the convolution result according to the order of sliding.

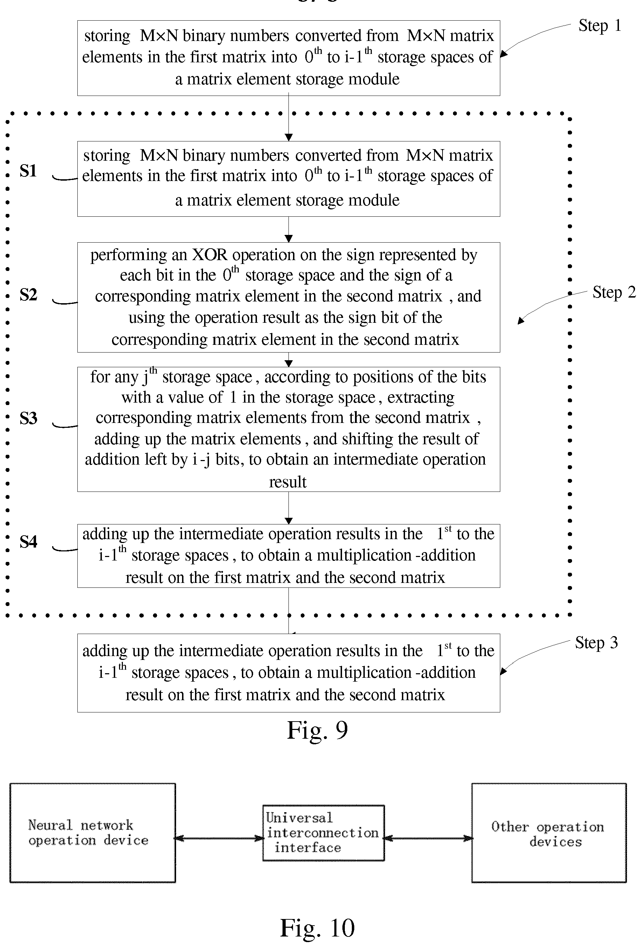

Fig. 9 is a flow chart of a neural network convolution operation according to an embodiment of the present disclosure. As shown in Fig. 9, the method mainly includes steps 1 to 3. Step 2 is the specific matrix multiplication-addition method (e.g., steps S1 to S4 as shown in Fig. 3). One embodiment of the neural network convolution operation can be carried out as below.

In step 1, the submatrix dividing module divides the neuron matrix into submatrixes. A convolution kernel matrix is used as a window to slide over the neuron matrix so as to obtain by each sliding a submatrix of the neuron matrix having the same scale as the convolution kernel matrix.

In the example shown in Fig. 1, the 3×3 matrix represented by the convolution kernel slides over the neuron matrix (image). Starting from the upper left corner, by each sliding with 1 pixel, a submatrix of the 5×5 matrix with the same scale as the convolution kernel matrix can be obtained; 9 submatrixes are obtained by sliding the convolution kernel for 9 times.

In step 2, the convolution kernel matrix serves as the first matrix, and each submatrix serves as a second matrix. A plurality of multiplication-addition results are obtained by performing the matrix multiplication-addition method using the matrix multiplication-addition device. In this step, the multiplication-addition is performed on the convolution kernel with each submatrix, obtaining 9 multiplication-addition results. The embodiment of the present disclosure performs multiplication-additions without the need for a multiplication, but merely by addition and shifting operations.

Taking the multiplication-addition on the 3×3 submatrix in the upper left corner of Fig. 1 to the convolution kernel 3×3 matrix as an example, Fig. 3 is a flow chart of a matrix multiplication-addition method according to an embodiment of the present disclosure. As shown in Fig. 1, the convolution kernel serves as the first matrix, and the submatrix in the upper left corner serves as the second matrix. The specific process can be referred to the afore-described matrix multiplication-addition device and method, and will not be repeated herein.

In step 3, the convolution result acquiring module 750 forms the multiplication-addition results into a matrix as a convolution result according to the order of sliding.

After the multiplication-additions on the 9 submatrix with convolution kernel following the above steps S1-S4, 9 multiplication-addition results are obtained, which form a 3×3 matrix as shown in Fig. 1 according to the order of sliding of the convolution kernel.

The neural network operation device of the present disclosure is used for acquire data to be processed and control information from other processing devices, performing specified neural network operations, and transmitting the result of execution to other processing devices through the I/O interface. When there are provided more than one neural network operation devices, the neural network operation devices can be interlinked via a particular structure transmit data. For example, they can be interlinked via a PCIE bus for data transmission, so as to support operations of a larger scale. In such case, the devices can share a common control system, or each may have its own control system. They may share a memory, or a respective memory may be provided for each accelerator. In addition, the interlinking manner can be of any interconnection topology.

Such a neural network operation device has high compatibility and can be connected to various types of servers through the PCIE interface.

The present disclosure further provides a combined processing device which includes the above described neural network operation device, a universal interconnection interface, and other processing devices. The neural network operation device interacts with the other processing devices (i.e., non-neural-network operation devices) to perform user-specified operations. Fig. 10 is a schematic diagram of a combined processing device according to an embodiment of the present disclosure.

The other processing devices include one or more types of general-purpose/dedicated processors such as a central processing unit CPU, a graphics processing unit GPU, a neural network operation unit, and the like. The number of processors included in other processing devices is not limited. The other processing devices serve as an interface between the neural network operation device and external data and control, including data transfer, to complete basic control such as starting and stopping of the neural network operation device. The other processing devices can also cooperate with the neural network operation device to complete operations together.

A universal interconnection interface is provided for transmitting data and control instructions between the neural network operation device and the other processing devices. The neural network operation device acquires required the needed input data from the other processing devices (processing devices for performing non-neural-network operations), and writes the data into the on-ship storage of the neural network operation device. The control instructions can be acquired from other processing and written into an on-chip control buffer of the neural network operation device. The data in the storage module of the neural network operation device can also be read and transmitted to the other processing devices.

The combined processing device can be used as a system on a chip SOC for a smart device such as a mobile phone, a robot, a drone, etc., which effectively reduces the core area of the control portion, increases the processing speed, and reduces the overall power consumption.

In one embodiment, the present disclosure provides a chip that includes the afore-described neural network operation device or the afore-described combined processing device.

In one embodiment, the present disclosure provides a chip package structure that includes the afore-described chip.

In one embodiment, the present disclosure provides a board that includes the afore-described chip package structure.

In one embodiment, the present disclosure provides an electronic device that includes the afore-described board.

The electronic device include a data processing device, a robot, a computer, a printer, a scanner, a tablet computer, a smart terminal, a mobile phone, a driving recorder, a navigator, a sensor, a webcam, a cloud server, a camera, a video camera, a projector, a watch, a headphone, a removable storage, a wearable device, a vehicle, a household appliance, and/or a medical device.

The transportation includes an airplane, a ship, and/or an automobile. The household appliance includes a television set, an air conditioner, a microwave oven, a refrigerator, a rice cooker, a humidifier, a washing machine, an elamp, a gas stove, and a range hood. The medical device includes a nuclear magnetic resonance instrument, a B-ultrasound machine, and/or an electrocardiograph.

The storage space of an embodiment of the present disclosure can be a storage space of any suitable storage media, which can be any suitable magnetic storage media or magneto-optical storage media, such as RRAM, DRAM, SRAM, EDRAM, HBM, HMC, and the like.

In addition, each functional unit (module) in the embodiments of the present disclosure can be integrated into one processing unit, or can be a physically separate existence. Or, two or more units can be integrated into one unit. The integrated unit can be implemented in the form of hardware or in the form of a software program module.

When the integrated unit is implemented in the form of hardware, the hardware can be a circuit, including a digital circuit, an analog circuit, and the like. Physical implementations of the hardware structure include but not limited to physical devices including, but not limited to, transistors, memristors, and the like. The computing module in the computing device can be any suitable hardware processor, such as a CPU, a GPU, an FPGA, a DSP, an ASIC, and the like. The storage unit may be any suitable magnetic storage media or magneto-optical storage media, such as RRAM, DRAM, SRAM, EDRAM, HBM, HMC, and the like. When the integrated unit is implemented in the form of a software functional unit and sold or used as a standalone product, it can be stored in a computer readable storage media.

The foregoing embodiments further explain the objective, the technical solution, and the advantageous effects of the present disclosure. It is appreciated that the foregoing is merely specific embodiments of the present disclosure, and is not intended to be limiting. Any modification, equivalent substitution, improvements, etc. made within the spirit and principles of the present disclosure shall be included in the scope of the present disclosure.

## Claims

1. A matrix multiplication-addition device for performing multiplication-additions on a first matrix and a second matrix, the matrix multiplication-addition device comprising:
a matrix element storage module, comprising a plurality of storage spaces for receiving M×N binary numbers of M×N matrix elements in the first matrix according to a rule defining that, the plurality of storage spaces are numbered as 0^{th} to i-1^{th} storage spaces, i is the bit width of the binary numbers, each storage space has a size of K bits, and K is equal to the number of the matrix elements in the first matrix, i.e., K=M×N, wherein the 0^{th} storage space is used for storing the sign bits of K binary numbers, and the j^{th} storage space is used for storing the i-j+1^{th} bit of each binary number, wherein the i, j, k, M, and N are positive integers, and i≥2, 1≤j≤i;
a symbolic operation module, for performing an XOR operation on the sign represented by each bit in the 0^{th} storage space and the sign of a corresponding matrix element in the second matrix, and using the operation result as the sign bit of the corresponding matrix element in the second matrix;
a numeric operation module, comprising at least one shifting operator and at least one adder, the numeric operation module being used for extracting, according to positions in the matrix of the matrix elements corresponding to the bits with a value of 1 in the j^{th} storage space, matrix elements at the corresponding positions from the second matrix, adding up the matrix elements at the corresponding positions, and shifting a result of addition left or right by i-j bits, to obtain an intermediate operation result; and
an accumulation module, for adding up the intermediate operation results in the 1^{st} to the i-1^{th} storage spaces to obtain a multiplication-addition result on the first matrix and the second matrix.

2. The matrix multiplication-addition device according to claim 1, wherein in the matrix element storage module, a correspondence between the matrix elements in the first matrix and the bits in each storage space is that: the k^{th} bit in each storage space is configured to store the bit of the matrix element at the m^{th} row and the n^{th} column in the first matrix, where 1≤k≤K, and k=(m-1) ×N+n, N is a total number of columns of the first matrix, 1≤m≤M, 1≤n≤N; or
a correspondence between the matrix elements in the first matrix and the bits in each storage space is that: the k^{th} bit stores the bit of the matrix element at the m^{th} row and the n^{th} column of a convolution kernel matrix A, where 1≤k≤K, and k=m+(n-1)×M, M is a total number of rows of the first matrix, 1≤m≤M, 1≤n≤N.

3. The matrix multiplication-addition device according to claim 2, wherein the numeric operation module is used for extracting, according to the correspondence, corresponding matrix elements from the positions of the corresponding matrix elements in the second matrix.

4. The matrix multiplication-addition device according to claim 1, wherein the numeric operation module is further used for, when obtaining the intermediate operation result from the storage spaces, revoking a calculated result if there are additions on matrix elements of the same positions.

5. The matrix multiplication-addition device according to claim 4, further comprising an intermediate storage module for storing, when the 0^{th} to the i-1^{th} storage spaces have at least two same bits with a value of 1, a result of addition on the corresponding matrix elements in the second matrix, for the revoking by the numeric operation module.

6. The matrix multiplication-addition device according to claim 1, wherein the adder is used for extracting, according to the positions in the matrix of the matrix elements corresponding to the bits with a value of 1 in the j^{th} storage space, matrix elements at the corresponding positions from the second matrix, and adding up the matrix elements at the corresponding positions;
preferably, the shifting operator is used to shift the results in the adder of the additions on the matrix elements to the left by i-j bits, to obtain the intermediate operation result.

7. The matrix multiplication-addition device according to claim 6, wherein the adder is further used for, when obtaining the intermediate operation result from the storage spaces, obtaining a calculated result from the intermediate storage module as input data of the adder if there are additions on matrix elements of the same positions.

8. The matrix multiplication-addition device according to claim 1, wherein the first matrix and the second matrix have the same number of rows and columns, and the matrix elements are fixed-point numbers.

9. The matrix multiplication-addition device according to claim 1, further comprising a conversion unit for converting the M×N binary numbers of the M×N matrix elements in the first matrix according to the rule.

10. A method of matrix multiplication-addition using the matrix multiplication-addition device according to any one of claims 1 to 9, for performing multiplication-additions on a first matrix and a second matrix, the method comprising:
receiving, by the plurality of storage spaces in the matrix element storage module, M×N binary numbers converted from M×N matrix elements in the first matrix according to the rule and storing the binary numbers into 0th to i-1^{th} storage spaces of the matrix element storage module, with i being the bit width of the binary numbers, each storage space having a size of K bits, and K being equal to the number of matrix elements in the first matrix, wherein the 0^{th} storage space is used for storing the sign bits of M×N binary numbers, and the j^{th} storage space is used for storing the i-j+1^{th} bit of each binary number, the i, j, and k are positive integers, and, i≥2, 1≤j≤i;
performing, by the symbolic operation module, an XOR operation on the sign represented by each bit in the 0^{th} storage space and the sign of a corresponding matrix element in the second matrix, and using the operation result as the sign bit of the corresponding matrix element in the second matrix;
according to positions of the bits with a value of 1 in the j^{th} storage space, extracting, by the numeric operation module, corresponding matrix elements from the second matrix, adding up the matrix elements, and shifting the result of addition left by i-j bits to obtain an intermediate operation result; and
adding up the intermediate operation results in the 1st to the i-1^{th} storage spaces by the accumulation module, to obtain a multiplication-addition result on the first matrix and the second matrix.

11. The method of matrix multiplication-addition according to claim 10, wherein a correspondence between the matrix elements in the first matrix and the bits in each storage space is that: the k^{th} bit in each storage space stores the bit of the matrix element at the m^{th} row and the n^{th} column in the first matrix, where 1≤k≤K, and k=(m-1)×N+n, N is a total number of columns of the first matrix, 1≤m≤M, 1≤j≤i; or
a correspondence between the matrix elements in the first matrix and the bits in each storage space is that: the k^{th} bit stores the bit of the matrix element at the m^{th} row and the n^{th} column of a convolution kernel matrix A, where 1≤k≤K, and k=m+(n-1)×M, M is a total number of rows of the first matrix, 1≤m≤M, 1≤n≤N.

12. The method of matrix multiplication-addition according to claim 11, wherein the numeric operation module is used for extracting, according to the correspondence, corresponding matrix elements from the positions of the corresponding matrix elements in the second matrix.

13. The method of matrix multiplication-addition according to claim 12, wherein when obtaining the intermediate operation result from the storage spaces, a calculated result is revoked by the numeric operation module if there are additions on matrix elements of the same positions.

14. The method of matrix multiplication-addition according to claim 13, further comprising, when the 0^{th} to the i-1^{th} storage spaces have at least two same bits with a value of 1, storing by an intermediate storage module a result of addition on the corresponding matrix elements in the second matrix, for the revoking by the numeric operation module.

15. The method of matrix multiplication-addition according to claim 14, further comprising, according to the positions in the matrix of the matrix elements corresponding to the bits with a value of 1 in the j^{th} storage space, extracting matrix elements at the corresponding positions from the second matrix and adding up the matrix elements at the corresponding positions by the adder;
preferably, the method further comprising shifting, by the shifting operator, the results in the adder of the additions on the matrix elements to the left by i-j bits, to obtain the intermediate operation result.

16. The method of matrix multiplication-addition according to claim 15, further comprising, when obtaining the intermediate operation result from the storage spaces, obtaining by the adder a calculated result as input data of the adder if there are additions on matrix elements of the same positions.

17. The method of matrix multiplication-addition according to claim 16, further comprising converting, by a conversion unit, the M×N binary numbers of the M×N matrix elements in the first matrix according to the rule.

18. A neural network operation device, comprising:
a submatrix dividing module for sliding over a neuron matrix with a convolution kernel matrix as a sliding window, and obtaining in each sliding a submatrix of the neuron matrix having the same scale as the convolution kernel matrix, with the convolution kernel matrix serving as a first matrix and each submatrix serving as a second matrix;
a matrix element storage module, comprising a plurality of storage spaces for receiving M×N binary numbers of M×N matrix elements in the first matrix according to a rule defining that, the plurality of storage spaces are numbered as 0^{th} to i-1^{th} storage spaces, i is the bit width of the binary numbers, each storage space has a size of K bits, and K is equal to the number of the matrix elements in the first matrix, i.e., K=M×N, wherein the 0^{th} storage space is used for storing the sign bits of K binary numbers, and the j^{th} storage space is used for storing the i-j+1^{th} bit of each binary number, the i, j, k, M, and N are positive integers, and, i≥2, 1≤j≤i;
a symbolic operation module, for performing an XOR operation on the sign represented by each bit in the 0^{th} storage space and a sign of a corresponding matrix element in the second matrix, and using the operation result as the sign bit of the corresponding matrix element in the second matrix;
a numeric operation module, comprising at least one shifting operator and at least one adder, the numeric operation module being used for extracting, according to positions in the matrix of the matrix elements corresponding to the bits with a value of 1 in the j^{th} storage space, matrix elements at the corresponding positions from the second matrix, adding up the matrix elements at the corresponding positions, and shifting a result of addition left or right by i-j bits, to obtain an intermediate operation result;
an accumulation module, for adding up the intermediate operation results in the 1^{st} to the i-1^{th} storage spaces to obtain a multiplication-addition result on the first matrix and the second matrix; and
a convolution result obtaining module for forming, according to the order of the sliding, the multiplication-addition results into a matrix as a convolution operation result.

19. The neural network operation device according to claim 18, wherein in the matrix element storage module, a correspondence between the matrix elements in the first matrix and the bits in each storage space is that: the k^{th} bit in each storage space stores the bit of the matrix element at the m^{th} row and the n^{th} column in the first matrix, where 1≤k≤K, and k=(m-1) × N+n, N is a total number of columns of the first matrix, 1≤m≤M, 1≤j≤i; or
a correspondence between the matrix elements in the first matrix and the bits in each storage space is that: the k^{th} bit stores the bit of the matrix element at the m^{th} row and the n^{th} column of a convolution kernel matrix A, where 1≤k≤K, and k=m+(n-1)×M, M is a total number of rows of the first matrix, 1≤m≤M, 1≤n≤N.

20. The neural network operation device according to claim 19, wherein the numeric operation module is used for extracting, according to the correspondence, corresponding matrix elements from the positions of the corresponding matrix elements in the second matrix.

21. The neural network operation device according to claim 18, wherein the numeric operation module is further used for, when obtaining the intermediate operation result from the storage spaces, revoking a calculated result if there are additions on matrix elements of the same positions.

22. The neural network operation device according to claim 21, further comprising an intermediate storage module for storing, when the 0^{th} to the i-1^{th} storage spaces have at least two same bits with a value of 1, a result of addition on the corresponding matrix elements in the second matrix, for the revoking by the numeric operation module.

23. The neural network operation device according to claim 18, wherein the adder is used for extracting, according to the positions in the matrix of the matrix elements corresponding to the bits with a value of 1 in the j^{th} storage space, matrix elements at the corresponding positions from the second matrix, and adding up the matrix elements at the corresponding positions;
preferably, the shifting operator is used for shifting the results in the adder of the additions on the matrix elements to the left by i-j bits, to obtain the intermediate operation result.

24. The neural network operation device according to claim 23, wherein the adder is further used for, when obtaining the intermediate operation result from the storage spaces, obtaining a calculated result from the intermediate storage module as input data of the adder if there are additions on matrix elements of the same positions.

25. The neural network operation device according to claim 18, wherein the first matrix and the second matrix have the same number of rows and columns, and the matrix elements are fixed-point numbers.

26. A method of convolution using the neural network operation device according to any one of claims 18 to 25, comprising:
sliding over a neuron matrix by the submatrix dividing module with a convolution kernel matrix as a sliding window, and obtaining in each sliding a submatrix of the neuron matrix having the same scale as the convolution kernel matrix, with the convolution kernel matrix serving as a first matrix and each submatrix serving as a second matrix;
receiving, by the plurality of storage spaces of the matrix element storage module, M×N binary numbers converted from M×N matrix elements in the first matrix according to a rule, with the M×N binary numbers converted from M×N matrix elements in the first matrix stored in 0^{th} to i-1^{th} storage spaces of the matrix element storage module, i being the bit width of the binary numbers, each storage space having a size of K bits, and K being equal to the number of the matrix elements in the first matrix, wherein the 0^{th} storage space is used for storing the sign bits of M×N binary numbers, and the j^{th} storage space is used for storing the i-j+1^{th} bit of each binary number, wherein the i, j, and k are positive integers, and i≥2, 1≤j≤i;
performing, by the symbolic operation module, an XOR operation on the sign represented by each bit in the 0^{th} storage space and the sign of a corresponding matrix element in the second matrix, and using the operation result as the sign bit of the corresponding matrix element in the second matrix;
for any j^{th} storage space, according to positions of the bits with a value of 1 in the storage space, extracting corresponding matrix elements from the second matrix, adding up the matrix elements, and shifting the result of addition left by i-j bits by the numeric operation module, to obtain an intermediate operation result;
adding up the intermediate operation results in the 1^{st} to the i-1^{th} storage spaces by the accumulation module, to obtain a multiplication-addition result on the first matrix and the second matrix; and
by the convolution result obtaining module, obtaining a multiplication-addition result on each submatrix with the first matrix and forming the multiplication-addition results into a matrix as a convolution result according to the order of the sliding.

27. The method according to claim 26, wherein a correspondence between the matrix elements in the first matrix and the bits in each storage space is that: the k^{th} bit in each storage space stores the bit of the matrix element at the m^{th} row and the n^{th} column in the first matrix, where 1≤k≤K, and k=(m-1)×N+n, N is a total number of columns of the first matrix, 1≤m ≤M, 1≤n≤N; or
a correspondence between the matrix elements in the first matrix and the bits in each storage space is that: the k^{th} bit stores the bit of the matrix element at the m^{th} row and the n^{th} column of a convolution kernel matrix A, where 1≤k≤K, and k=m+(n-1)×M, M is a total number of rows of the first matrix, 1≤m≤M, 1≤n≤N.

28. The method according to claim 26, wherein the numeric operation module is used for extracting, according to the correspondence, corresponding matrix elements from the positions of the corresponding matrix elements in the second matrix.

29. The method according to claim 26, further comprising, when obtaining the intermediate operation result from the storage spaces, revoking a calculated result by the numeric operation module if there are additions on matrix elements of the same positions

30. The method according to claim 26, further comprising, according to the positions in the matrix of the matrix elements corresponding to the bits with a value of 1 in the j^{th} storage space, extracting matrix elements at the corresponding positions from the second matrix and adding up the matrix elements at the corresponding positions by the adder;
preferably, the method further comprising shifting, by a shifting operator, the results in the adder of the additions on the matrix elements to the left by i-j bits, to obtain the intermediate operation result.

31. The method according to claim 30, further comprising, when obtaining the intermediate operation result from the storage spaces, obtaining by the adder a calculated result as input data of the adder if there are additions on matrix elements of the same positions.

32. The neural network operation device according to any one of claims 18 to 25, which is used for acquiring data to be operated and control information from outside, executing neural network operations, and transmitting the result of the execution through an I/O interface; preferably the neural network operation device comprises a plurality of matrix multiplication-addition devices linked to transmit data.

33. A combined processing device, comprising:
the neural network operation device according to claim 32;
a universal interconnection interface;
a non-neural-network operation device;
wherein the neural network operation device is used for interacting with the non-neural-network operation device via the universal interconnection interface to complete user-specified operations together.

34. A chip, comprising the neural network operation device according to claim 32 or the combined processing device according to claim 33.

35. An electronic device, comprising the chip according to claim 34.
